# EUROPEAN PATENT APPLICATION

(11) **EP 1 871 132 A1**
(43) Date of publication of application: **26.12.2007**
(21) Application number: 06731550.7
(22) Date of filing: 11.04.2006
(51) Int. Cl.: H04Q 7/38

(54) **MOBILE COMMUNICATION SYSTEM AND MOBILE UNIT**

(30) Priority: 11.04.2005 JP 2005113794
(71) Applicant: NTT DoCoMo Inc., Chiyoda-ku Tokyo 100-6150 (JP)
(72) Inventor: HAPSARI, Wuri A., c/o Intellectual Property Dept., Chiyoda-ku, Tokyo 100-6150 (JP); ISHII, Minami, /o Intellectual Property Dept., Chiyoda-ku, Tokyo 100-6150 (JP); MOON, Sung Uk, c/o Intellectual Property Dept., Chiyoda-ku, Tokyo 100-6150 (JP); NAKAMURA, Takehiro, c/o Intellectual Property Dept, Chiyoda-ku, Tokyo 100-6150 (JP)
(74) Representative: Beresford, Keith Denis Lewis
(86) International application number: PCT/JP2006/307603
(87) International publication number: WO 2006/109783

(57) **Abstract**

In multiple communication networks operated by different carriers, when a roaming mobile station performs communication with a roaming communication network PLMN, the communication networkwas able to recognize only the radio capability reported by the mobile station. When the communication network and mobile station differ in radio capability they support, problems arise in that the roaming mobile station sometimes cannot establish a user data channel and its success rate can reduce, and sometimes can operate in an unintended manner. The mobile station has a PLMN decision internal list (30) and radio capability internal list (31). A to-be-connected network decision section (12) outputs detailed information on a to-be-connected communication network PLMN, and decides the to-be-connected communication network PLMN. A radio capability selecting section (13) selects radio capability values from the radio capability internal list (31), and reports the radio capability report list to the communication network to be connected.

## Description

### TECHNICAL FIELD

The present invention relates to a mobile communication system and mobile station. More particularly, the present invention relates to a mobile communication system and mobile station, which report radio capability to a communication network.

### BACKGROUND ART

When a mobile station establishes a radio link and user data channel from a standby condition (including a power-on state), it is necessary for a communication network to know the radio capability of the mobile station to allocate radio resources corresponding to the radio capability of the mobile station.

To enable a user to make use of a variety of services, the mobile station reports its radio capability to a communication network as one of the procedures for establishing the radio link and user data channel (non-patent document 1). For example, according to the 3GPP standard, the mobile station side information is reported to the communication network side (non-patent document 1 and non-patent document 2, for example). The term "radio capability" here refers to a concept including not only the layer 1 level radio capability to be supported by the mobile station as a radio tranceiver, but also higher level layer capability that defines a channel configuration. For example, it includes as the layer 1 level radio capability the output power (UE power class) of the mobile station and the frequency separation of transmission and reception (Tx/Rx frequency separation) ; and as the higher level layer capability the buffer size (such as a Total RLC AM and MAC-hs buffer size), window size (such as a Maximum RLC AM window size), compression mode selection (such as Need for downlink compressed mode), and a specification number to which the mobile station conforms (such as an Access stratum release indicator).

As for the conventional mobile communication system, however, a problem can occur in a part or in a plurality of parts of the radio capability of the communication network if the mobile station carries out communication beyond its radio capability reported bt the mobile station. For example, it is not unlikely that the establishment of the user data channel fails, or the mobile station performs operation the communication network does not intend. In particular, such a problem is more likely to occur when the mobile station is roaming in a communication network of another carrier rather than when it is connected to the carrier with which a user of the mobile station makes contract. The problem will be described in more detail below.

The mobile communication system is roughly consists of a communication network PLMN (Public Land Mobile Network) and a mobile station operating in its service area. In the mobile communication system, various types of functions are usually introduced in stages successively in accordance with the development stage of the system it conforms to. Specifically, both on the communication network side and mobile station side, newer functions and higher functions are successively introduced growingly.

Accordingly, it is likely that the communication network side and mobile station side support different functions even within a mobile communication system of a single carrier depending on the development phases of the mobile communication system. For example, as for a certain function, it is likely that although the communication network side supports it, the mobile station side does not, or vice versa. Thus, as described above, at a certain point of time, in the communication network systems operated by individual carriers, the radio capability can differ between the elements of the systems, and particularly between the functions supported by the communication network PLMN and the mobile station.

The radio capability supported by the mobile station can be identified by "the specification number (Release number) to which the mobile station conforms". According to the specification number (Release number) to which the mobile station conforms, contents of individual items of the radio capability of the mobile station are specified. In addition, even in the same Release number, the radio capability supported differs depending on its version. For example, in the standards determined by the 3GPP, revision of the standards involving large system specification changes over a rather long period of time is distinguished by the specification number (Release). In addition, in the standards with the same specification number, revision of the standards within a smaller extent over a rather short period of time is distinguished by the version. For example, in the case of Release 5.1 in the 3GPP standards, 5 denotes the Release number and 1 denotes the Version number. In the prior art, in a 3GPP CDMA communication system, for example, the radio capability of the mobile station is recognized between the communication network and mobile station according to the information on the specification number (Release).

Within the mobile communication network PLMN of a single carrier, it is possible to circumvent the problem even if the radio capability differs between the communication network and the mobile station. This is because within the same carrier, the communication network (carrier) itself knows the specification numbers and versions of various types of mobile stations operating within its communication network PLMN, and because the communication network PLMN side allocates appropriate radio resources to the mobile stations according to the individual specification numbers and versions.

A problem can occur in such case that the specification number (release number) to which a particular mobile station adheres is the same as the specification number (release number) of the roaming communication network PLMN, and the version (Version number) is older. When the specification number of the mobile station is newer than the specification number of the communication network PLMN, the foregoing problem does not occur.

Here, consider conditions in which a plurality of mobile communication networks are respectively operated by a plurality of different carriers. For example, a plurality of carriers may sometimes operate mobile communication systems with the same standard in the same area. In such conditions, there may be cases where a so-called roaming is made to cover the coverage hole of the service area between the different carriers. In addition, as for a plurality of carriers with different service areas, the roaming is sometimes made between them for the same reason. In such a case, in the prior art, for the communication network side in which the mobile station roams, the mobile station sends the maximum capability it supports (capability implemented in the hardware) to the roaming side network without change.

When the specification number to which the mobile station adheres is identical to the specification number (release number) of the roaming communication network , the communication network carries out the processing in accordance with the specification number exactly. When the version (Version number) of the communication network is newer, however, the radio capability of the mobile station sometimes cannot cope with the processing requested by the communication network, thereby offering the problem described above.

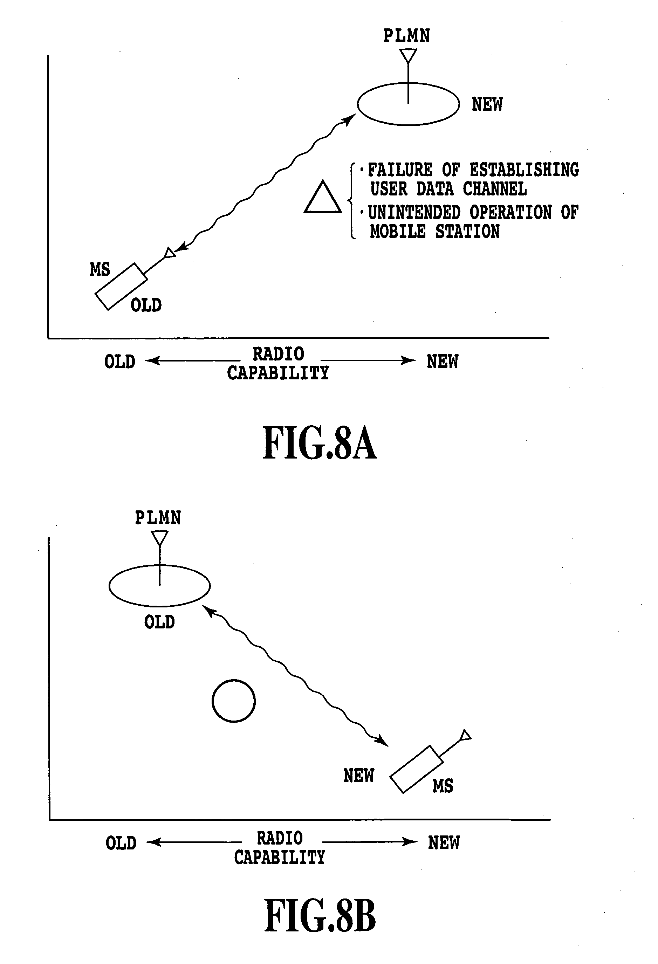

FIG. 8A and FIG. 8B are schematic diagrams illustrating the problem caused by the radio capability difference between the mobile station and the radio communication network. As illustrated in FIG. 8B, when the specification number (Release number) of the mobile station leads the specification number of the network side, that is, when the radio capability of the mobile station side is newer, no problem occurs. In contrast, as illustrated in FIG. 8A, when the mobile station has an older version (Version number) even though the specification number of the mobile station is identical to the specification number (Release number) of the network side, that is, when the radio capability of the mobile station side is older, the problem can sometimes occur.

For example, the case of FIG. 8A has sometimes a problem in that the roaming mobile station cannot establish the user data channel normally, or the success rate of establishing the user data channel link is reduced. In addition, even after establishing the radio link, the mobile station can bring about abnormal operation the network side does not intend. For example, there arise phenomena that the mobile station halts the connection processing with the network without responding to the response of the network, or sends a failure message response back to the response of the network.

Incidentally, when the specification number (Release number) of the mobile station is older than the specification number (Release number) of the network side, such a problem does not occur. This is because according to the prior art the mobile station reports the specification number (Release number), and hence on the basis of the backward compatibility provided by the specification, the communication network side can adjust to the radio capability of the mobile station.

Furthermore, the mobile station can have some variations in the radio capability it supports in accordance with the time the manufacturer of the mobile station ships the mobile station. It is difficult for the roaming side network to know the details of such small differences in the radio capability of the mobile station. Such a case can also offer a problem in that the user data channel cannot be established normally, or the success rate of establishing the user data channel is reduced. Besides, it is possible that even after establishing the radio link, the mobile station brings about abnormal operation the network side does not intend.

Therefore an object of the present invention is to solve the foregoing problems in that the roaming mobile station can fail to establish the user data channel because of the difference in the radio capability between the communication network and the mobile station, in that the success rate of establishing the user data channel link can reduce, and in that the mobile station can carry out operation the network side does not intend.

Thus, when the version (Version number) of the specification number of the mobile station is older than that of the communication network, the mobile station selects and/or alters the radio capability it reports according to the to-be-connected communication network, thereby enabling the normal communication between the mobile station and the radio communication network.

Non-patent document 1: The 3rd Generation Partnership Project (3GPP), TS 25.331, 8.1.6 (relating to the report on the radio capability).
Non-patent document 2: The 3rd Generation Partnership Project (3GPP), TS 25.306 (relating to items of the radio capability).
Non-patent document 3: The 3rd Generation Partnership Project (3GPP), TS 23.122, 3.1,4.4 (relating to selection methods of PLMN).

### DISCLOSURE OF THE INVENTION

To accomplish the foregoing object, the invention as described in claim 1 is a mobile communication system capable of interconnecting between communication networks operated by different carriers, the mobile communication system comprising: a mobile station that can perform radio communication with a plurality of communication networks operated by different carriers, said mobile station selects a radio capability value for at least one of radio capability items in a radio capability internal list stored in advance according to a to-be-connected communication network selected from the plurality of communication networks, and reports to the to-be-connected communication network a radio capability report list composed of the radio capability value selected, wherein said communication network includes a radio network unit for establishing a user data channel link with said mobile station according to the radio capability report list from said mobile station.

The invention as described in claim 2 is characterized in that the radio capability value selected according to the to-be-connected communication network is within a limit of radio capability values defined by a specification number to which the mobile station conforms.

The invention as described in claim 3 is A mobile station capable of communicating with a plurality of communication networks operated by different carriers, and reporting its radio capability to each of said plurality of communication networks, said mobile station comprising:a control section for carrying out communication control with said plurality of communication networks, said control section including:communication network search means for searching for a communication network capable of communicating with said mobile station from said plurality of communication networks; communication network decision means for deciding, from said communication networks capable of communicating with said mobile station, a to-be-connected communication network based on a communication network decision internal list stored in advance; radio capability selection means for selecting, according to detailed information on the to-be-connected communication network determined by said communication network decision means and according to information on services to be used, a radio capability value for each or part of a plurality of radio capability items in a radio capability internal list stored in advance; and radio capability report means for reporting to said communication network a radio capability report list composed of a plurality of radio capability values selected by said radio capability selection means; a memory section including the communication network decision internal list and the radio capability internal list as part of proper information; and a radio section under control of said control section for carrying out the communication network search and radio capability report, and for transmitting and receiving the radio capability report list with said to-be-connected communication network via a radio interface.

The invention as described in claim 4 is characterized in that the radio capability value selected according to the to-be-connected communication network is within a limit of radio capability values defined by a specification number to which the mobile station conforms.

### BRIEF DESCRIPTION OF THE DRAWINGS

FIG. 1 is a block diagram showing a configuration of a mobile communication system of an embodiment in accordance with the present invention;
FIG. 2 is a functional block diagram of a mobile station in accordance with the present invention;
FIG. 3 is a diagram illustrating the operation of a communication network search section and a to-be-connected network decision section;
FIG. 4A is a schematic diagram illustrating a processing procedure of a radio capability selecting section;
FIG. 4B is a schematic diagram illustrating a processing procedure of the radio capability selecting section;
FIG. 5 is a diagram illustrating an operation flow of the mobile communication system of the embodiment in accordance with the present invention;
FIG. 6 is a schematic diagram illustrating UE Cap transmission to another communication network;
FIG. 7 is a block diagram showing an outline of a configuration of the mobile station;
FIG. 8A is a schematic diagram illustrating a problem resulting from the difference in the radio capability between the mobile station and the network; and
FIG. 8B is a schematic diagram illustrating the problem resulting from the difference in the radio capability between the mobile station and the network.

### BEST MODE FOR CARRYING OUT THE INVENTION

### (Configuration of Mobile Communication System of Embodiment in Accordance with Present Invention)

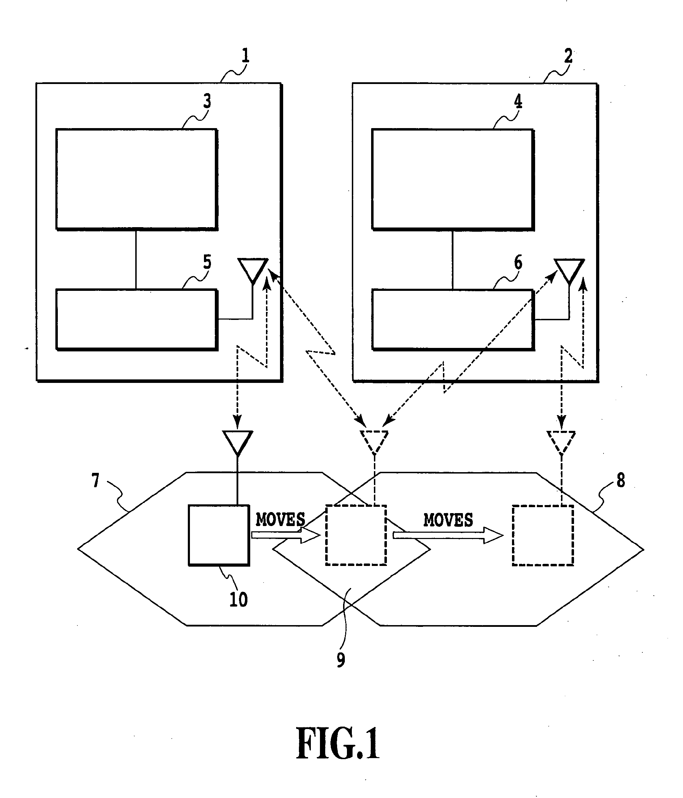

FIG. 1 is a block diagram showing a configuration of a mobile communication system of an embodiment in accordance with the present invention.

### (Units in System Configuration)

As shown in FIG. 1, the mobile communication system of the embodiment in accordance with the present invention comprises a plurality of communication networks PLMNs operated respectively by one of a plurality of carriers, and a mobile station that selects the communication network PLMN and is connected thereto.

Each communication network PLMN comprises a core network CN and a radio network unit for controlling radio resource allocation to the mobile station.

FIG. 1 shows a communication network PLMN #1 (1) and a communication network #2 (2) operated by a different carrier, and a service area 7 of the communication network PLMN #1 (1) and a service area 8 of the communication network PLMN #2 (2) which are adjacent to each other. The two service areas 7 and 8 have an overlapping area 9. The communication network PLMN #1 (1) comprises a core network CN #1 (3) and a radio network unit #1 (5), and the communication network PLMN #2 (2) comprises a core network CN #2 (4) and a radio network unit #2 (6). FIG. 1 assumes a case where the mobile station 10 can communicate with any of the plurality of carriers. In other words, the configuration is applicable to the case that the roaming service is provided over the carrier of the communication network PLMN #1 (1) and the carrier of the communication network PLMN #2 (2).

When in the service area 7 of the communication network PLMN #1 (1), the mobile station 10 receives the broadcast information of the communication network PLMN #1 (1). After that, the mobile station 10 is connected to the communication network PLMN #1 (1) and is controlled by the radio network unit #1 (5).

When moving into the overlapping service area 9, the mobile station 10 receives the broadcast information of both the communication network PLMN #1 (1) and communication network PLMN #2 (2). Then, the mobile station 10 selects the communication network PLMN #1 (1) or communication network PLMN #2 (2) as the PLMN to be connected to, and can be connected thereto actually.

In addition, when in the service area 8 of the communication network PLMN #2 (2), the mobile station 10 is connected to the communication network PLMN #2 (2) and is controlled by the radio network unit #2 (6).

### (Description about Functions of Mobile station)

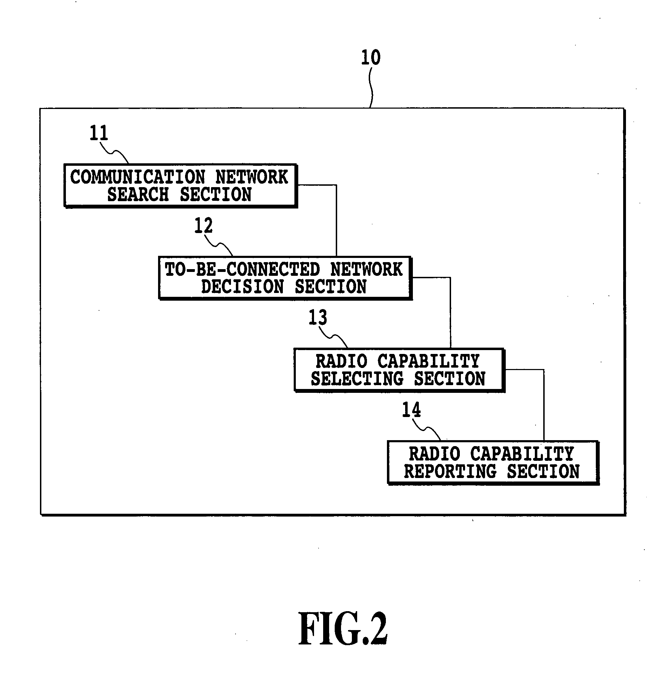

FIG. 2 is a functional block diagram of the mobile station constituting the mobile communication system of the embodiment in accordance with the present invention.

The mobile station 10 includes a communication network search section 11, a to-be-connected network decision section 12, a radio capability selecting section 13, and a radio capability reporting section 14. The functions and processing of these portions of the mobile station, which characterize the present invention, will now be described in detail below.

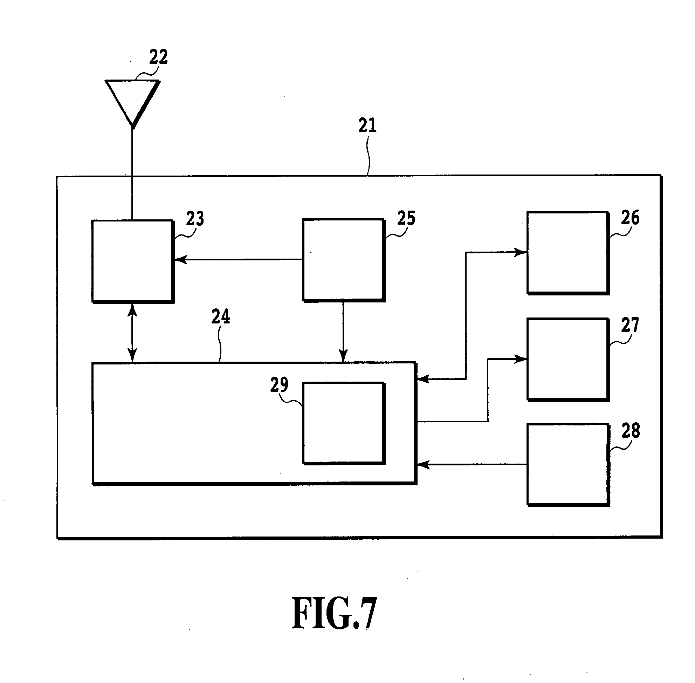

FIG. 7 is a block diagram showing an outline of the configuration of the mobile station in accordance with the present invention. The mobile station 21 comprises a control section 24 to which are connected a microphone 28 for inputting sounds, a speaker 27 for outputting sounds, and a display 26 for displaying information; a radio section 23; and a power supply section 25. The power supply section 25 is connected to the control section 24 and radio section 23 to supply power necessary for the operation of the mobile station. The radio section 23, which is connected to the control section 24 and antenna section 22, carries out transmission and reception of the radio signals with the outside of the mobile station, and carries out the radio communication with the communication network PLMN via an air interface.

The control section 24 includes a memory section 29 composed of a writable memory or the like. The memory section 29 stores in advance the information peculiar to the user of the mobile station and a plurality of lists peculiar to the present invention which will be described later. The control section 24 refers to the lists stored in the memory section 29 as needed. Although not shown in FIG.7, the control section 24 includes a CPU and the like, and controls the mobile station in its entirety according to control software program executed on the CPU. The configuration of the mobile station of FIG. 7 is not limited to this. For example, although not shown in FIG. 7, it can include an input means such as a key input section, and an output means such as another display unit. In addition, the mobile station with the configuration of FIG. 7 can constitute part of other equipment including these functional blocks or part of them.

The functions and/or processing of the individual functional blocks peculiar to the present invention shown in FIG. 2 are mainly carried out by the control section 24 in the block diagram of the mobile station in FIG. 7. A part of the functions and/or processing is also carried out by the radio section 23 under the control of the control section 24. The following description will be made referring to the operation of the mobile station of FIG. 7 as needed.

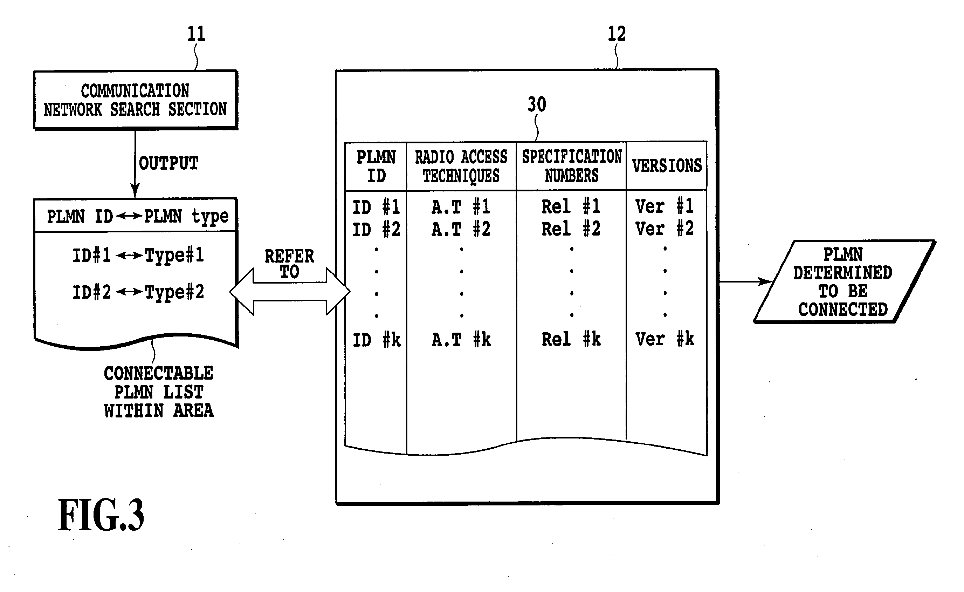

FIG. 3 is a diagram illustrating the operation of the communication network search section and the to-be-connected network decision section. The communication network search section 11 receives the identification number information (PLMN ID) and type information (PLMN type) of the communication network PLMN from the broadcast channel of the individual communication networks in the area in which the mobile station wishes to perform communication. The communication network search section 11 is configured in such a manner that it makes a list of the connectable PLMNs within the area, and supplies the list to the to-be-connected communication network decision section 12. The processing of the communication network search section 11 can be performed by means of the software processing in the control section 24 of the mobile station. According to the software program stored in the mobile station, the control section 24 controls the radio section 23 so that it is tuned to the broadcast channel and demodulates the broadcast channel information.

The to-be-connected network decision section 12 is configured in such a manner that it refers to a PLMN decision internal list 30 stored in the memory section 29 of the mobile station via a connectable PLMN list obtained by the communication network search section 11, selects one of the to-be-connected communication networks PLMNs from the PLMN decision internal list 30, and decides it.

The "PLMN decision internal list 30" has detailed information related to the communication network such as the identification number (PLMN ID) and type (PLMN Type) of the communication networks PLMNs to which the mobile station can be connected, the radio access techniques (ATs) operatable by the individual communication network, and the specification number (Rel) and version (Ver) of the individual communication networks associated with each other. The PLMN decision internal list 30 is written into the memory section 29 in the mobile station by the manufacturer of the mobile station when the mobile station is fabricated, for example. It can also be written by a dealer of the mobile station.

From among the individual connectable communication network PLMN lists the mobile station can recognize from the information on the broadcast channel, the mobile station decides the to-be-connected PLMN according to an existing decision criteria with reference to the PLMN decision internal list 30. As the existing decision criteria of the to-be-connected PLMN, the signal strength of the broadcast channels of the individual communication networks PLMNs can be used. Alternatively, the to-be-connected PLMN can be decided according to the PLMN priority information stored in the mobile station. Alternatively, the user can input the to-be-connected communication network from the user interface (keypad) of the mobile station. The processing of the to-be-connected network decision section 12 can be executed according to the software program processing by the control section 26 of the mobile station.

The detailed information about the to-be-connected communication network PLMN (such as the PLMN ID, radio access technique, specification number of the PLMN, and PLMN version) decided using the PLMN decision internal list 30 is supplied to the next radio capability selecting section 13.

The radio capability selecting section 13 is configured in such a manner as to select the radio capability to be reported to the communication network PLMN according to the detailed information on the communication network PLMN the mobile station decides to connect itself to.

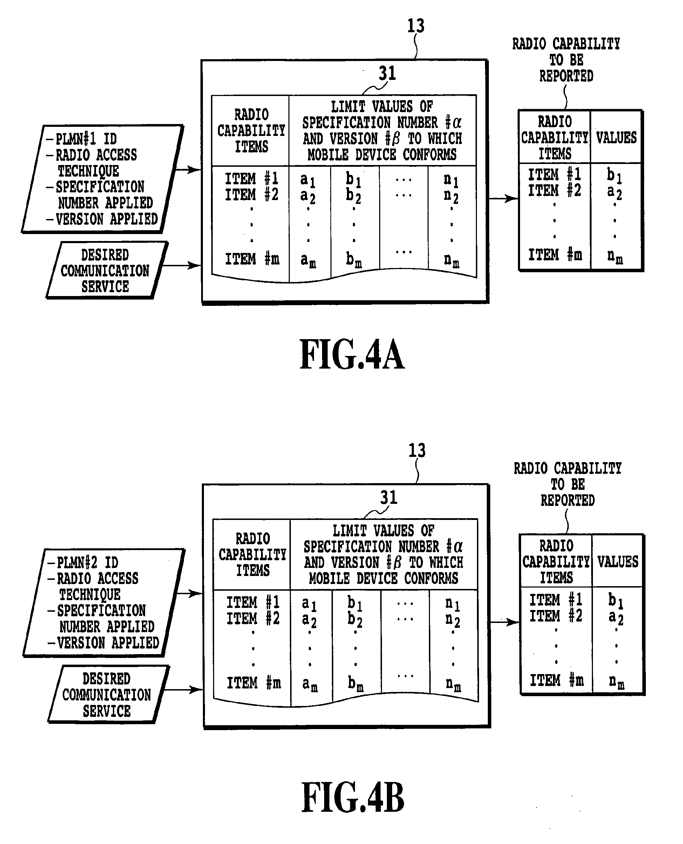

FIG. 4A and FIG. 4B are schematic diagrams illustrating the processing procedure of the radio capability selecting section. As to the individual items of the radio capability actually implemented in the mobile station, the radio capability selecting section 13 refers to the "radio capability internal list 31" describing a plurality of values of the radio capability based on the specification number #a and version number #β of the standard to which the mobile station conforms. The radio capability internal list 31 is stored in the memory section 29 of the control section 24 in the mobile station. During manufacturing the mobile station, the radio capability internal list 31 representing the radio capabilities the mobile station is able to support is prepared according to the specification number #a and version number β of the standard to which the mobile station conforms, and is stored into the memory section 29.

According to the detailed information on the PLMN as to which the to-be-connected network decision section 12 makes a decision of connecting, and according to the communication service (speech communication, packet and the like) the mobile station wishes to receive, the radio capability selecting section 13 changes the value of the radio capability and selects a particular value from the radio capability values within the individual limits for all or part of the items of the radio capability of the radio capability internal list 31.

For example, FIG. 4A shows the case where the radio capability selecting section 13 selects the PLMN #1, and FIG. 4B shows the case it selects the PLMN #2. In FIG. 4A and FIG. 4B, the radio capability internal list 31 includes m radio capability items and n radio capability values. Here, the number of the radio capability values is not always n in all the radio capability items. In other words, some radio capability items have the radio capability values less than n. For example, such a case is also possible in which the radio capability value is a choice of Yes or No. Referring to FIG. 4A, when the PLMN #1 is selected, according to the detailed information on the PLMN #1 selected, b1 is selected as to the item number 1 of the radio capability, a2 is selected as to the item number 2 of the radio capability, and nm is selected as to the item number m of the radio capability. Referring to FIG. 4B, when another PLMN #2 is selected, according to the detailed information on the PLMN #2 selected, a1 is selected as to the item number 1 of the radio capability, b2 is selected as to the item number 2 of the radio capability, and bm is selected as to the item number m of the radio capability.

Thus, according to the detailed information on the communication network PLMN the mobile station selects, the appropriate radio capability value is selected for each item of the radio capability the mobile station supports. When the communication network PLMN selected by the mobile station changes, the mobile station prepares a radio capability report list having the different radio capability values. The radio capability report list is output from the radio capability selecting section 13. Thus, even when the mobile station carries out communication with the roaming communication network PLMN, the to-be-connected communication network PLMN can recognize the radio capability of the mobile station in detail from the radio capability report list. The foregoing processing of the radio capability selecting section 13 concerning the mobile station and communication network can be executed by means of the software processing by the control section 24 of the mobile station.

The radio capability reporting section 14 is configured in such a manner as to report the radio capability items selected to the communication network, which is decided to be connected, as the radio capability report list. The processing of the radio capability reporting section 14 is executed by means of software processing under the control of the control section 24 of the mobile station.

As described above in detail, according to the detailed information on the to-be-connected communication network PLMN, the mobile station in accordance with the present invention can report the radio capability list the mobile station can support to the communication network PLMN. Accordingly, it is possible to solve the problems in that the roaming mobile station fails to establish the user data channel because of the difference in the radio capability, in that the success rate of establishing the user data channel reduces, and in that the mobile station carries out operation the network side does not intend.

### (Operation of Mobile Communication System of Embodiment in Accordance with Present Invention)

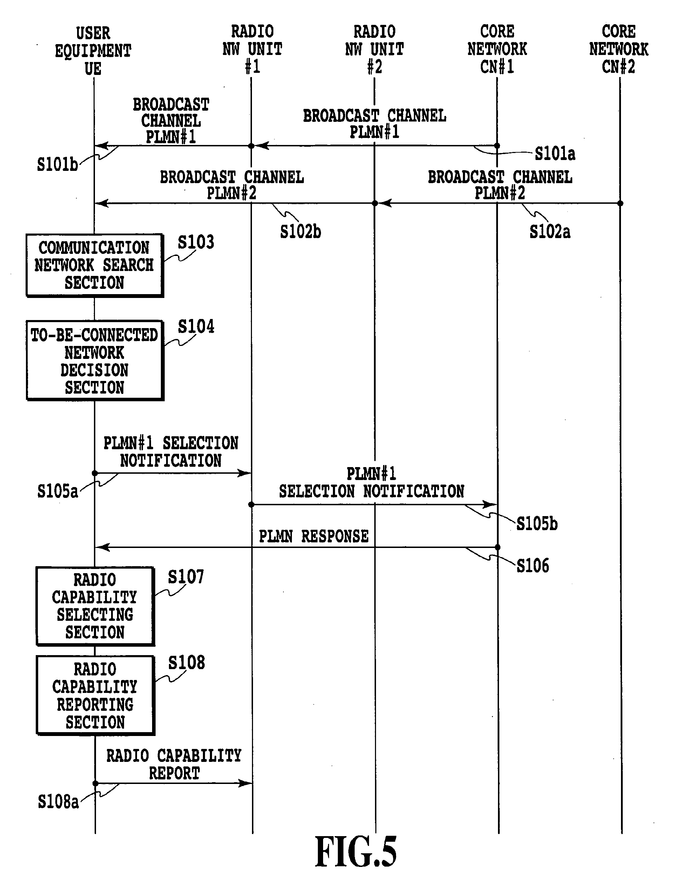

FIG. 5 is a diagram illustrating the operation flow of the mobile communication system of a first embodiment in accordance with the present invention.

The operation will be described when the mobile station 10 is in the overlapping service area 9 of the service area 7 of the communication network PLMN #1 and the service area 8 of the communication network PLMN #2 in FIG. 1.

As a result of selecting the communication network PLMN, the mobile station UE (User Equipment) is connected to the communication network PLMN #1, and reports the radio capability UECap to the communication network PLMN #1. This operation will now be described.

First, steps S101a - S101b and S102a - S102b show the operation in which the mobile station receives the broadcast information transmitted through a broadcast channel of the individual PLMNs.

At steps S101a - S101b, the broadcast information on the communication network PLMN #1 is transferred from the core network CN #1 to the radio network unit #1, and is transmitted from the radio network unit #1 to the mobile station UE via the air interface.

Likewise, at steps S102a - S102b, the broadcast information on the communication network PLMN #2 is transferred from the core network CN #2 to the radio network unit #2, and is transmitted from the radio network unit #2 to the mobile station UE via the air interface.

Based on the broadcast information from the communication network PLMN #1 and communication network #2, the mobile station UE obtains the communication network identification number PLMN ID and the PLMN Type information indicating the type of each communication network.

At step S103, the processing of the communication network search section 11 is performed as described above. Specifically, according to the PLMN IDs and PLMN Type information, the communication network search section of the mobile station UE searches for the connectable PLMN in the area 9 where the mobile station UE is locating, and outputs the connectable PLMN list.

Subsequently, at step S104, the processing of the to-be-connected network decision section 12 is performed as described above. The to-be-connected communication network decision section 12 refers to the "PLMN decision internal list" 30 which describes all the PLMNs the mobile station can recognize via the connectable PLMN list obtained at step S103, and makes a decision that the mobile station should be connected to the communication network PLMN #1. It makes the decision in accordance with the existing decision criteria as described above. For example, it makes the decision in accordance with the broadcast channel signal strength, the order of priorities stored, or the like.

Next, at step S105a, the mobile station provides via the air interface the radio network unit #1 with the PLMN #1 selection notification about the communication network PLMN #1 decided to be connected. At step S105b, the PLMN #1 selection notification from the mobile station UE is transferred from the radio network unit #1 to the core network CN #1.

At step S105a - S105b, a radio link on the control channel is established between the radio network unit #1 and the mobile station UE, and the mobile station UE is connected to the communication network PLMN #1.

In addition, at step S106, the core network CN #1 sends a PLMN response back to the mobile station UE to acknowledge the connection.

Subsequently, after receiving the PLMN response, the mobile station UE carries out the foregoing processing of the radio capability selecting section 13 at step S107. More specifically, the radio capability selecting section 13 prepares the report list of the radio capability according to the communication service (voice, packet or the like) the mobile station UE wishes to receive, and according to the detailed information (version to be applied, radio access technique and the like) on the to-be-connected communication network PLMN #1 decided at step S104. As described before, the mobile station UE stores the "radio capability internal list 31" which describes the radio capability items and their values for the specification number and version the mobile station conforms to. According to the detailed information and the desired communication service of the communication network PLMN #1, and from the radio capability internal list 31, the mobile station UE alters part of the individual values of the radio capability items actually implemented in the mobile station UE, or selects the radio capability values from within the capability range the mobile station supports. The selected individual radio capability values of the individual radio capability items constitute the radio capability report list to be reported, and the UE Cap #1 information is determined.

At step S108, the foregoing processing of the radio capability reporting section 14 is performed. Specifically, the mobile station UE reports the radio capability information UE Cap #1 to the communication network side. At step S108a, the radio capability reporting section 14 transmits the radio capability information UE Cap #1 to the radio network unit #1 via the air interface.

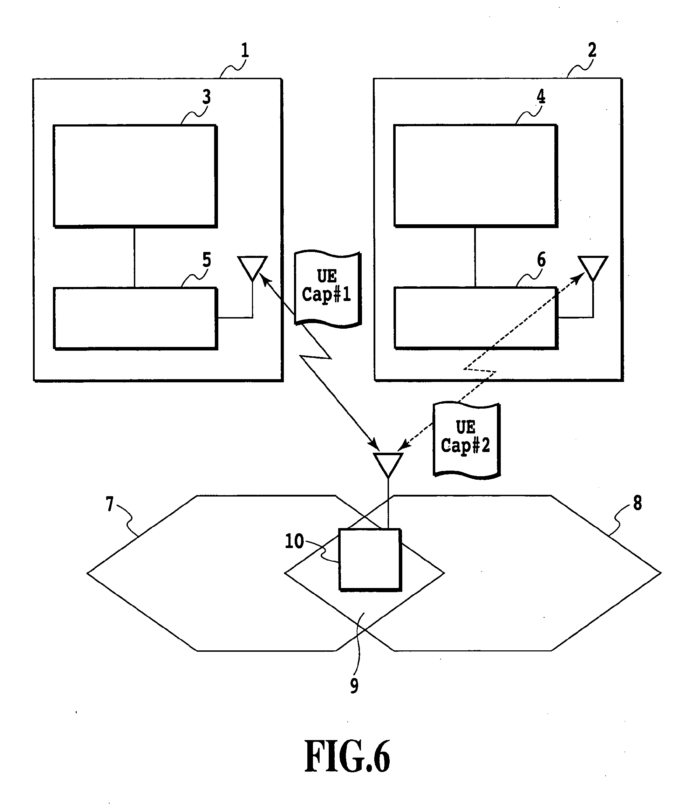

FIG. 6 is a schematic diagram illustrating transmission of the UE Cap to another communication network. The foregoing example describes the case where the mobile station UE is connected to the communication network PLMN #1. In contrast with this, when the mobile station UE is connected to the communication network PLMN #2 as shown in FIG. 6, the mobile station reports the radio capability information UE Cap #2 to the communication network PLMN #2 in the same procedure as described above. Specifically, according to the detailed information and service contents of the to-be-connected communication network PLMN #2, the mobile station UE alters and selects the values of the individual items of the radio capability, and prepares another radio capability report list. The radio capability information UE Cap #2 is transmitted to the radio network unit #2.

Receiving the UE Cap #1 and UE Cap #2 from the mobile station UE, the radio network unit #1 and radio network unit #2 respectively can allocate the radio resources according to the radio capability of the mobile station UE. When the mobile station is roaming, that is, when the to-be-connected communication network PLMN is not the communication network PLMN that has made the contract as the home communication network, the mobile station can flexibly and adaptively alters its radio capability in accordance with the communication network PLMN where it is roaming. This makes it possible to circumvent the problem that arises from the difference in the radio capability between the communication network PLMN and the mobile station.

### INDUSTRIAL APPLICABILITY

As described above, according to the present invention, the mobile station selects or alters in part the radio capability to be reported in accordance with the communication network (carrier). This enables the normal communication between the communication network and mobile station with preventing the mobile station from failing to establish the user data channel, the success rate of establishing the user data channel from reducing, or the mobile station from operating in the manner the communication network does not intend.

## Claims

1. A mobile communication system capable of interconnecting between communication networks operated by different carriers, said mobile communication system comprising:
a mobile station that can perform radio communication with a plurality of communication networks operated by different carriers, said mobile station selects a radio capability value for at least one of radio capability items in a radio capability internal list stored in advance according to a to-be-connected communication network selected from the plurality of communication networks, and reports to the to-be-connected communication network a radio capability report list composed of the radio capability value selected, wherein
said communication network includes a radio network unit for establishing a user data channel link with said mobile station according to the radio capability report list from said mobile station.

2. The mobile communication system as claimed in claim 1, wherein
the radio capability value selected according to the to-be-connected communication network is within a limit of radio capability values defined by a specification number to which said mobile station conforms.

3. A mobile station capable of communicating with a plurality of communication networks operated by different carriers, and reporting its radio capability to each of said plurality of communication networks, said mobile station comprising:
a control section for carrying out communication control with said plurality of communication networks, said control section including:
communication network search means for searching for a communication network capable of communicating with said mobile station from said plurality of communication networks;
communication network decision means for deciding, from said communication networks capable of communicating with said mobile station, a to-be-connected communication network based on a communication network decision internal list stored in advance;
radio capability selection means for selecting, according to detailed information on the to-be-connected communication network determined by said communication network decision means and according to information on services to be used, a radio capability value for each or part of a plurality of radio capability items in a radio capability internal list stored in advance; and
radio capability report means for reporting to said communication network a radio capability report list composed of a plurality of radio capability values selected by said radio capability selection means;
a memory section including the communication network decision internal list and the radio capability internal list as part of proper information; and
a radio section under control of said control section for carrying out the communication network search and radio capability report, and for transmitting and receiving the radio capability report list with said to-be-connected communication network via a radio interface.

4. The mobile station as claimed in claim 3, wherein
the radio capability value selected according to the to-be-connected communication network is within a limit of radio capability values defined by a specification number to which said mobile station conforms.
